# EUROPÄISCHE PATENTSCHRIFT

(11) **EP 2 121 836 B1**
(45) Veröffentlichungstag und Bekanntmachung des Hinweises auf die Patenterteilung: **11.05.2011**
(21) Anmeldenummer: 08708142.8
(22) Anmeldetag: 24.01.2008
(51) Int. Cl.: C08L 67/00

(54) **VERFAHREN ZUR EINSCHRITT-PROGRAMMIERUNG VON DREIFORMENKUNSTSTOFFEN**
METHOD FOR THE ONE-STEP PROGRAMMING OF THREE-SHAPE PLASTICS
PROCÉDÉ DE PROGRAMMATION EN UNE ÉTAPE DE MATIÈRES PLASTIQUES À TROIS FORMES

(30) Priorität: 22.02.2007 DE 102007010564
(43) Veröffentlichungstag der Anmeldung: 25.11.2009
(73) Patentinhaber: Helmholtz-Zentrum Geesthacht Zentrum für Material- und Küstenforschung GmbH, 21502 Geesthacht (DE)
(72) Erfinder: BELLIN, Ingo, 68159 Mannheim (DE); LENDLEIN, Andreas, 14167 Berlin (DE)
(74) Vertreter: Gulde Hengelhaupt Ziebig & Schneider
(86) Internationale Anmeldenummer: PCT/EP2008/050803
(87) Internationale Veröffentlichungsnummer: WO 2008/101760

(56) Entgegenhaltungen:
- EP-A- 1 338 613
- EP-A- 1 362 879
- EP-A- 1 790 694
- WO-A-01/91822
- WO-A-95/35071
- WO-A-2004/033539
- WO-A-2004/090042
- WO-A-2007/118766
- US-A- 5 442 037
- US-A- 5 446 109
- US-A- 5 506 300
- US-A- 5 756 651
- US-B1- 6 388 043

## Beschreibung

Die Erfindung betrifft ein Verfahren zur Herstellung eines programmierten Formgedächtnispolymers (Dreiformenkunststoffes) beziehungsweise ein Verfahren zur Programmierung eines Formgedächtnispolymers, das - neben einer permanenten Form - mindestens zwei temporäre Formen in Abhängigkeit von der Temperatur einnehmen kann.

Im Stand der Technik sind so genannte Formgedächtnispolymere oder SMPs (shape memory polymers) bekannt, die bei Induktion durch einen geeigneten Stimulus einen Formübergang von einer temporären Form in eine permanente Form entsprechend einer vorherigen Programmierung zeigen. Am häufigsten ist dieser Formgedächtniseffekt thermisch stimuliert, das heißt, bei Erwärmung des Polymermateriats über die definierte Schalttemperatur findet die durch Entropieelastizität angetriebene Rückstellung statt. Formgedächtnispolymere sind in der Regel Polymernetzwerke, bei denen chemische (kovalente) oder physikalische (nicht kovalente) Vernetzungsstellen die permanente Form bestimmen. Die Programmierung erfolgt, indem oberhalb der Übergangstemperatur einer von einem Schaltsegment gebildeten Phase (=Schaltphase) das Polymermaterial deformiert und anschließend unter Aufrechterhaltung der Deformationskräfte unter diese Temperatur abgekühlt wird, um die temporäre Form zu fixieren. Erneute Erwärmung oberhalb der Schalttemperatur führt zu einem Phasenübergang und Wiederherstellung der ursprünglichen permanenten Form. (Da die Schalttemperatur T_{sw} im Gegensatz zur Übergangstemperatur Tₜᵣₐₙₛ von der mechanischen Bewegung abhängt, welche die makroskopische Formveränderung definiert, können beide Temperaturen geringfügig voneinander abweichen.)

Derartige Formgedächtnispolymere mit einem Zweiformeneffekt sind in beispielsweise in den Druckschriften EP 1 338 613 A, WO 2001/91822 A, US 5 442 037 A und US 5 446 109 A beschrieben. Aus den Druckschriften EP 1 790 694 A, WO 2004/090042 A, WO 2004/033539 A und US 5 506 300 A sind Polymerblends mit Formgedächtniseigenschaften bekannt, die nach einer entsprechenden Programmierung einen Formenübergang auszuführen vermögen. Zwar weisen derartige Zweiformenkunststoffe neben der Übergangstemperatur, welche den Formenübergang triggert (Schalttemperatur) noch eine weitere thermodynamische, höhere Übergangstemperatur auf, jedoch ist diese dem so genannten Hartsegment zugeordnet, welches die permanente Form stabilisiert. Wird diese Temperatur überschritten, kommt es zu einem Aufschmelzen der permanenten Form und einem mehr oder weniger vollständigen Formverlust. Dieser entspricht jedoch nicht einem definierten Formenübergang im Sinne des Formgedächtniseffekts, bei dem eine definierte vorbestimmte Form wiederhergestellt wird.

Darüber hinaus sind in jüngerer Zeit auch AB-Polymernetzwerke (so genannte Dreiformenkunststoffe oder "triple-shape polymers") beschrieben worden, die zwei aus verschiedenen Schaltsegmenten gebildeten Phasen mit unterschiedlichen Übergangs- bzw. Schalttemperaturen aufweisen und dadurch in der Lage sind, neben ihrer permanenten Form zwei temporäre Formen in ihrem "Formgedächtnis" zu speichern (z.B. WO 99/42528 A). Diese Dreiformenkunststoffe weisen grundsätzlich mindestens zwei nicht-mischbare, segregierte Phasen auf, so dass jede Phase für die Fixierung jeweils einer temporären Form genutzt werden kann. Dabei wird die permanente Form durch kovalente Vernetzungsstellen des Polymernetzwerkes festgelegt, während die beiden temporären Formen durch einen (gemäß Stand der Technik zweischrittigen) thermomechanischen Programmierprozess definiert werden. Die Fähigkeit, temperaturinduziert zwei aufeinanderfolgende Formenübergänge zu vollziehen, nämlich von einer ersten temporären Form in eine zweite temporäre Form und von dort in die permanente Form, ermöglicht komplexe Bewegungen und eröffnet vielfältige Anwendungsmöglichkeiten, beispielsweise in der Medizin.

So beschreibt EP 1 362 879 A Formgedächtnispolymere (in diesem Fall interpenetrierende Netzwerke IPNs), die aus einer kovalent vernetzten Polymerkomponente, insbesondere auf Basis von Caprolacton-, Lactid-, Glycolid- oder p-Dioxanoneinheiten, und einer nicht kovalent vernetzten Polyesterurethankomponente bestehen. Das Polymer kann zwei temporäre Formen speichern, wobei Schalttemperaturen um 50 und 90°C beschrieben werden.

US 6 388 043 B1 und die nachveröffentlichte Druckschrift WO 2007/118766 A beschreiben jeweils Triple-Shape-Polymere, die neben der permanenten Form zwei temporäre Formen einnehmen können. Die Programmierung erfolgt in zwei Schritten, wobei im ersten Schritt das Polymer bei einer Temperatur oberhalb der oberen Übergangstemperatur entsprechend der ersten temporären Form deformiert und anschließend auf eine Temperatur unterhalb der oberen Übergangstemperatur, insbesondere unterhalb der unteren Übergangstemperatur, unter Fixierung der ersten temporären Form abgekühlt wird. Im anschließenden zweiten Schritt erfolgt die Programmierung der zweiten temporären Form, wobei bei einer Temperatur zwischen den beiden Übergangstemperaturen eine Deformation entsprechend der zweiten temporären Form erfolgt und diese anschließend durch Abkühlung unterhalb der unteren Übergangstemperatur fixiert wird.

Auch aus Liu et al. (Macromol. Rap. Comm. 26, 2005, 649ff) ist ein SMP bekannt (in diesem Fall ein semi-interpenetrierendes Netzwerk SIPN), bestehend aus Polymethylmethacrylateinheiten (PMMA) und Polyethylenglycoleinheiten (PEG), das ebenfalls zwei Schalttemperaturen (bei 40 und 86°C) aufweist. Das dort beschriebene Programmierverfahren erlaubt jedoch nur die Speicherung einer temporären Form.

Bellin et al. (Proc. Natl. Acad. Sci. U.S.A. 2006, 103, 18043-18047) sowie die noch unveröffentlichte DE 10 2006 017 759 beschreiben einen Dreiformenkunststoff mit Schaltsegmenten auf Polyester- und Polyacrylatbasis, insbesondere aus Poly(ε-caprolacton) (PCL) und Poly(cyclohexylmethacrylat) (PCHMA), sowie ein Verfahren zu dessen Programmierung. Um zwei temporäre Formen zu speichern, ist dort ein im Wesentlichen zweischrittiges thermomechanisches Verfahren vorgesehen, bei dem das Polymer unter Fixierung der ersten temporären Form auf eine Temperatur unterhalb der oberen Übergangstemperatur abgekühlt wird und anschließend das Polymer unter Fixierung der zweiten temporären Form auf eine Temperatur unterhalb der unteren Übergangstemperatur abgekühlt wird. Diese Zweischritt-Programmierung liefert zwar sehr gute Ergebnisse, ist jedoch verhältnismäßig zeitaufwändig und erfordert eine komplexe Kombination aus Temperaturführung und mechanischer Deformation.

Der Erfindung liegt daher die Aufgabe zugrunde, ein Verfahren zur Programmierung von zumindest zwei gespeicherten Formen eines Formgedächtnispolymers (Dreiformenkunststoffs) zur Verfügung zu stellen, das in seiner Durchführung schneller und einfacher als das bekannte Verfahren ist.

Diese Aufgabe wird durch ein Verfahren mit den Merkmalen des Anspruchs 1 gelöst. Das erfindungsgemäße Verfahren zur Herstellung eines programmierten Formgedächtnispolymers (Dreiformenkunststoffs), das eine erste temporäre Form einnimmt und zumindest zwei weitere gespeicherte, thermisch abrufbare, Formen aufweist, nämlich zumindest eine zweite temporäre Form und eine permanente Form, besteht aus folgenden Schritten:
(a) Bereitstellung eines Formgedächtnispolymers, das mindestens zwei Schaltsegmente (A, B) umfasst, welche durch Phasensegregation jeweils eine Schaltphase mit jeweils einer Übergangstemperatur (T_{trans,A}, T_{rans,B}) ausbilden,
(b) Deformation des Formgedächtnispolymers in eine der ersten temporären Form entsprechende Form bei einer Temperatur oberhalb der oberen Übergangstemperatur (T_{trans,A}), und
(c) Abkühlung auf eine Temperatur unterhalb der unteren Übergangstemperatur (T_{trans,B}) unter Fixierung der ersten temporären Form.

Im Gegensatz zu dem bekannten Verfahren, bei dem die Programmierung zweischrittig erfolgt, wobei in jedem Schritt eine temporäre Form definiert wird, indem unter Fixierung der vorgegebenen Deformation unterhalb der nächsttieferen Übergangstemperatur abgekühlt wird, weist das erfindungsgemäße Programmierverfahren lediglich einen solchen Schritt auf, in welchem die Abkühlung in einem Schritt über beide Übergangstemperaturen hinweg erfolgt. Durch diese Vereinfachung ist das Verfahren insgesamt schneller und mit geringerem Aufwand durchführbar. Ergebnis des Programmierverfahrens ist ein Dreiformenkunststoff, der in einer ersten temporären Form vorliegt und neben seiner, durch die Vernetzungsstellen definierten permanenten Form eine zweite temporäre Form in seinem Formengedächtnis gespeichert aufweist. Durch anschließende sequentielle Erwärmung über die beiden Schalttemperaturen der Schaltsegmente hinweg werden ausgehend von der ersten temporären Form nacheinander zunächst die zweite temporäre Form und anschließend die permanente Form wiederhergestellt. Die Möglichkeit der einschrittigen Programmierung war insofern überraschend, als eine reproduzierbare Einstellung einer zweiten temporären Form während der (graduellen oder stufenweisen) Erwärmung beobachtet werden kann, ohne dass eine solche durch einen definierten Formenstress während des Programmierens aufgezwungen wird.

Dabei wird mit dem Begriff Schaltsegment das Kettensegment des Polymernetzwerkes, welches die Schaltphase bildet, bezeichnet. Die Schaltphase bildet sich durch Phasenentmischung (Segregation) von verschiedenen Kettensegmenten des Polymernetzwerkes im Festkörper aus und trägt damit entscheidend zur Ausbildung der typischen Morphologie des Materials bei. Auf diese Weise wird erreicht, dass das Polymernetzwerk als Ganzes Materialeigenschaften aufweist, die den jeweiligen Schaltphasen zugeordnet werden können, insbesondere zwei oder mehrere unterschiedliche Übergangs- bzw. Schalttemperaturen für den thermisch-induzierten Effekt, bei denen es sich unabhängig voneinander um Glasübergangs- oder Schmelztemperaturen handeln kann.

Als besonders geeignet für die erfindungsgemäße einstufige Programmierung haben sich Formgedächtnispolymere erwiesen, die eine AB-Netzwerkarchitektur aufweisen, bei dem die die Schaltphasen bildenden Polymerketten (Schaltsegmente) mit jeweils ihren beiden Kettenenden kovalent im Polymernetzwerk gebunden vorliegen. Auf diese Weise erfolgt über die Deformation der beiden Schaltsegmente - auch in einem einstufigen Programmierverfahren - eine ausreichende Fixierung der beiden temporären Formen.

Die im oben genannten Schritt (b) erfolgende Deformation, das heißt die Ausübung einer mechanischen Verformung, um das Polymersystem von seiner permanenten Form in die erste temporäre Form zu überführen, kann beispielsweise in Form einer Dehnung in mindestens eine Raumrichtung, einer Stauchung in mindestens eine Raumrichtung oder einer mehr oder weniger komplexen Biegung des Formgedächtnispolymers erfolgen. Auch Kombinationen der vorgenannten Deformationen sind möglich. Grundsätzlich wird die bei der Erwärmung zur Abrufung der gespeicherten Formen sich einstellende zweite temporäre Form eine Zwischenform zwischen der ersten temporären Form und der permanenten Form darstellen. Wird beispielsweise das Formgedächtnispolymer in eine Raumrichtung gedehnt, wird sich als zweite temporäre Form eine Länge einstellen, die zwischen der Länge der ersten temporären Form und der permanenten Form liegt. Dabei wird das Ausmaß der während der Erwärmung auf die höchste Übergangstemperatur erfolgenden Rückstellung des programmierten Formgedächtnispolymers von der ersten temporären Form in die zweite temporäre Form und/oder von der zweiten temporären Form in die permanente Form durch die Massenanteile der zumindest zwei segregierten Phasen im Polymer wesentlich beeinflusst.

Ein im Rahmen der vorliegenden Erfindung besonders geeignetes Formgedächtnispolymer weist mindestens zwei Schaltphasen mit unterschiedlichen Übergangstemperaturen auf, so dass das Polymermaterial in Abhängigkeit von der Temperatur neben einer permanenten Form mindestens zwei temporäre Formen einnehmen kann, wobei ein erstes Schaltsegment, das die erste Schaltphase ausbildet, vorzugsweise im Wesentlichen auf einem Polyester der allgemeinen Formel I mit n = 1...14 oder einem Derivat von diesem basiert oder auf einem Co-Polyester der allgemeinen Formel I mit n = 1...14, worin mindestens zwei solche Estereinheiten vorhanden sind, oder einem Derivat von diesen. Dabei umfassen im Rahmen der vorliegenden Erfindung Derivate des Polyesters nach Formel I Strukturen, in denen ein oder mehrere Wasserstoffreste der Methyleneinheiten (-CH₂-) durch unverzweigte oder verzweigte, gesättigte oder ungesättigte C1- bis C14-Reste ausgetauscht sind. Entscheidend bei der Auswahl der Substituenten im angegebenen Rahmen ist, dass die Ausbildung einer eigenen segregierten Phase der Schaltsegmente nicht verhindert wird.

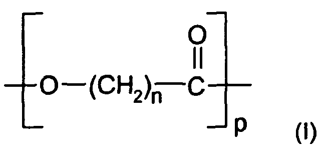

In bevorzugter Ausgestaltung der Erfindung umfasst das erste Schaltsegment ein Poly(ε-caprolacton)-Segment mit n = 5 oder ein Derivat von diesem, in dem die aliphatischen Kohlenstoffatome unabhängig voneinander mit einem oder zwei, unverzweigten oder verzweigten, gesättigten oder ungesättigten C1- bis C14-Resten substituiert sein können. Besonders bevorzugt ist jedoch nicht derivatisiertes Poly(ε-caprolacton) mit n = 5 (PCL) nach Formel 1, das heißt ohne Substituenten.

Nach einer weiteren vorteilhaften Ausgestaltung wird ein Formgedächtnispolymer eingesetzt, das ein zweites, die zweite Schaltphase ausbildendes Schaltsegment umfasst, welches im Wesentlichen auf einem Polyacrylat der allgemeinen Formel II basiert, worin R gleich H oder CH₃ ist und R₁ einen gesättigten oder ungesättigten, zyklischen oder aliphatischen, unsubstituierten oder substituierten C1-C18-Rest bedeutet.

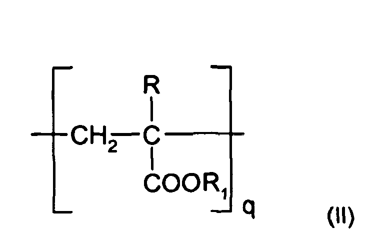

In weiterer vorteilhafter Ausgestaltung der Erfindung umfasst das zweite Schaltsegment ein Poly(cyclohexylmethacrylat)-Segment (PCHMA) mit R = CH₃ und R₁ = C₆H₁₁ (Cyclohexyl) oder ein Poly(cyclohexylacrylat)-Segment mit R = H und R₁ = C₆H₁₁ nach Formel II. Besonders bevorzugt von diesen ist Poly(cyclohexylmethacrylat). Weitere vorteilhafte, unter Formel II fallende Schaltsegmente sind Poly(methylmethacrylat) (PMMA) und Poly(2-hydroxyethylmethacrylat) (PHEMA).

Es ist besonders bevorzugt vorgesehen, ein Formgedächtnispolymer für die erfindungsgemäße Einschritt-Programmierung einzusetzen, dessen erstes Schaltsegment ein Polyester oder ein Co-Polyester der allgemeinen Formel I mit n = 1...14, insbesondere Poly(ε-caprolacton), ist und dessen zweites Schaltsegment Polyacrylat der allgemeinen Formel II, insbesondere Poly(cyclohexylmethacrylat), ist. Durch diese Zusammensetzung wird ein Material erhalten, das nach entsprechender Programmierung in der Lage ist, zumindest zwei temporäre Formen gleichzeitig zu fixieren, die nach Aktivierung durch entsprechende thermische Stimuli wiederhergestellt werden können. Als eine besonders vorteilhafte Eigenschaft des vorstehend beschreibenen Polymersystems sind seine Schalttemperaturen zu erwähnen, die einen großen Temperaturabstand voneinander aufweisen. Insbesondere unterscheiden sich die beiden Schalttemperaturen der Schaltsegmente nach Formel I and II um zumindest 40 K, insbesondere von zumindest 50 K und vorzugsweise von zumindest 60 K voneinander. Ein weiterer Vorteil des Materials stellt die hohe Schalttemperatur des Poly(meth)acrylatsegments dar, die insbesondere abhängig von dem Rest R₁ und der mittleren Kettenlänge q bei zumindest 110°C, insbesondere zumindest 120°C liegt.

Die Molekulargewichte der eingesetzten Kettensegmente sowie ihre Massenanteile im vorgenannten Polymer und ihre relativen Massenverhältnisse (Schaltsegment A : Schaltsegment B) sind bevorzugt so abgestimmt, dass die oben genannten Schalttemperaturen eingehalten werden und deutliche Formveränderungen bei den zumindest zwei Schaltübergängen nach dem einstufigen Programmierverfahren erzielt werden. Mit Vorteil weisen die die Schaltphase A bildenden Kettensegmente (Polyester-basiert) ein mittleres Molekulargewicht im Bereich von 2.000 bis 100.000 g/mol, insbesondere von 5.000 bis 40.000 g/mol, vorzugsweise von etwa 10.000 g/mol auf. Vorzugsweise liegt ein Massenanteil des Polyestersegments im Formgedächtnispolymer oberhalb von 30 und unterhalb von 80 %, insbesondere im Bereich von 35 bis 60 %, vorzugsweise im Bereich von 50 bis 60 %. Entsprechend weist das Polyacrylatsegment einen Massenanteil von ≤ 70 % und ≥ 20 %, insbesondere im Bereich von 65 bis 40 %, bevorzugt 50 bis 40 % auf.

Das vorstehend beschriebene Formgedächtnispolymer kann vorteilhaft durch ein Verfahren hergestellt werden, indem
- ein Polyester-Makromonomer der allgemeinen Formel I a, worin n = 1...14 und Y ein beliebiger verbindender Rest ist, oder einem Co-Polyester der allgemeinen Formel I a (worin n und Y die obige Bedeutung haben) mit mindestens zwei Estereinheiten mit unterschiedlichen n und m oder einem Derivat von diesen und 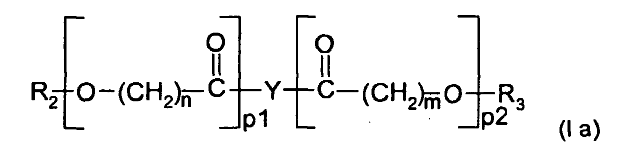
- ein Acrylatmonomer der allgemeinen Formel II a, worin R gleich H oder CH₃ ist und R₁ einen gesättigten oder ungesättigten, zyklischen oder aliphatischen, unsubstituierten oder substituierten C1-C18-Rest bedeutet, 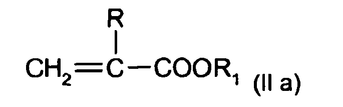 miteinander copolymerisiert werden. Bevorzugte Ausgestaltungen des Polyesters und des Acrylatmonomers werden entsprechend der vorstehenden Beschreibung gewählt. Dabei können in Formel I a p1 und p2, das heißt die Kettenlängen der Polyester bzw. Co-Polyester, gleich oder ungleich sein. Der Rest Y dient ausschließlich der Verbindung der beiden Polyestereinheiten unter Umkehrung der Kettenrichtung, so dass beidseitig polymerisationsfähige Endgruppen angefügt werden können, die der Vernetzung dienen (s.u.).

Ein geeignetes Makromonomer der Polyesterkomponente entspricht beispielsweise der allgemeinen Formel I b mit r = 2...8 und X = O oder NH. Besonders bevorzugt ist eine Komponente mit r = 2, p3 = 2 und X=O, das heißt, das Polyester-Makromonomer wird durch Polymerisation von Diethylenglycol HO-CH₂CH₂-O-CH₂-CH₂-OH mit den entsprechenden Estermonomeren erhalten.

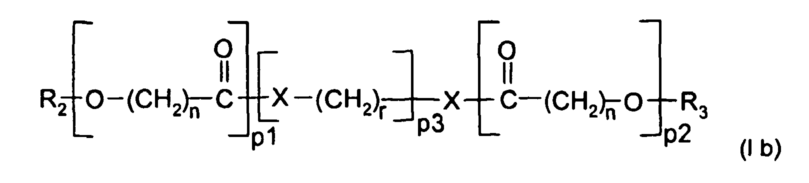

Bevorzugt sind die erste Endgruppe R₂ und/oder die zweite Endgruppe R₃ des ersten Schaltsegments unabhängig voneinander ein polymerisierbarer Rest. Vorzugsweise sind sowohl R₂ als auch R₃ jeweils ein polymerisierbarer Rest. Besonders bevorzugt werden für R₂ und/ oder R₃ Acryl- oder Methacrylreste eingesetzt, insbesondere jeweils ein Methacrylrest. Auf diese Weise erhält man bei der Copolymerisation beider Komponenten ein Netzwerk, in dem die Polyestersegmente beidseitig verknüpft sind.

Nach einer besonders bevorzugten Ausführung wird als Acrylatkomponente Cyclohexylmethacylat nach Formel II b eingesetzt, die bei ihrer (Homo)Polymerisation zu Poly(cyclohexylmethacrylat)-Segmenten nach Formel II c führt.

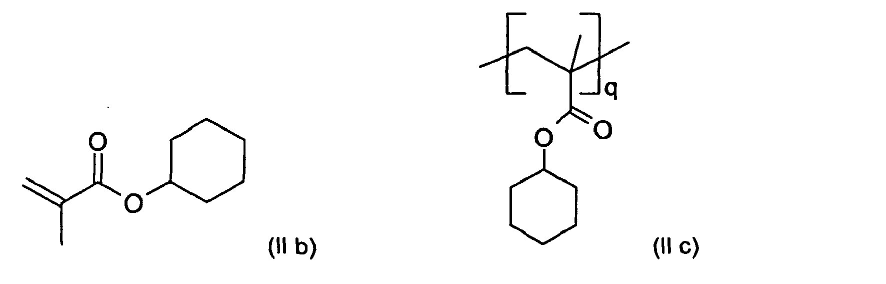

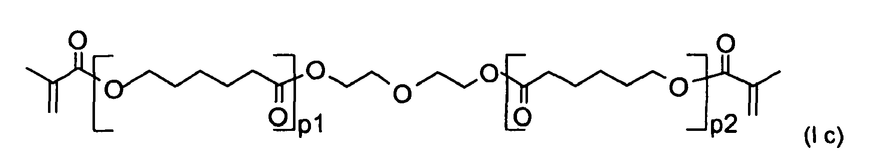

In einer besonders bevorzugten Ausgestaltung wird somit das als oligomerer Vernetzer eingesetzte Makrodimethacrylat, Poly(ε-caprolacton)-dimethacrylat (PCLDMA) nach Formel I c, mit einem Molekulargewicht von etwa 10.000 g/mol mit dem Monomer Cyclohexylmethacylat (CHMA) nach Formel II b copolymerisiert. Hierdurch entsteht ein vernetztes AB-Blockcopolymer, das Segmente nach Formel I c und Segmente nach Formel II c enthält.

Das vorstehend beschriebene Formgedächtnispolymer eignet sich besonders vorteilhaft für Anwendungen in der Konstruktionstechnik, beispielsweise für Befestigungselemente, die nach Ausüben eines entsprechenden Temperaturstimulus in eine Verankerungsform überführt werden können. Insbesondere ist das erfindungsgemäße Polymer in Bereichen vorteilhaft, in denen prozessbedingt relativ hohe Temperaturen (bis 100 °C) auftreten, ohne dass die vollständige Wiederherstellung der permanenten Form des Polymers erwünscht ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematische Struktur eines AB-Polymernetzwerkes, erhalten durch Copolymerisation von PCLDMA-Makromonomer und CHMA-Monomer, das als Demonstrationsbeispiel für das erfindungsgemäße Programmierverfahren dient,
- Figur 2: strukturelle Veränderungen eines AB-Polymernetzwerkes gemäß Figur 1 während seiner Einschritt-Programmierung, a) Fixierung einer temporären Form durch die PCHMA-Phase (Zweiformeneffekt), b) Fixierung einer tem- porären Form durch die PCL-Phase (Zweiformeneffekt), c) Fixierung von zwei temporären Formen durch die PCHMA-und die PCL-Phase (Dreifor- meneffekt), und
- Figur 3: zeitliche Verläufe der Dehnung eines PCL-PCHMA-Netzwerkes erhalten während des vierten Zyklus in einem zyklischen, thermomechanischen Experiment, a) Tₜ = 70 °C, Tₕ = 150 °C, b) Tₜ = -10 °C, Tₕ = 70 °C, c) Tₜ = - 10 °C, Tₕ = 150 °C,

Das erfindungsgemäße Programmierverfahren wird nachfolgend am Beispiel eines AB-Polymernetzwerkes aus Poly(ε-caprolacton) (PCL) und Poly(cyclohexylmethacrylat) (PCHMA) erläutert, das mit Vorteil für das erfindungsgemäße Programmierverfahren einsetzbar ist.

### 1. Synthese eines AB-Polymernetzwerkes durch Copolymerisation von PCLDMA und CHMA

Poly(ε-caprolacton)dimethacrylat (PCL10kDMA) wurde hergestellt wie in Bellin et al. (Proc. Natl. Acad. Sci. U.S.A. 2006, 103, 18043-18047) bzw. DE 2006 017 759.2 beschrieben aus Poly(ε-caprolacton)diol mit einem mittleren Molekulargewicht von 10 000 g/mol (PCL10k-diol) und Methacryloylchlorid. Der ¹H-NMR-spektroskopisch bestimmte Methacrylisierungsgrad betrug etwa 85 %.
PCL10DMA und Cyclohexylmethacrylat (CHMA) (Reinheit ≥ 97 %, Aldrich) gemäß Formel II b (s.o.) wurden in verschiedenen Mischungsverhältnissen zwischen 10 und 80 Gew.-% PCLDMA eingewogen. Diese Mischungen aus PCL10kDMA und CHMA wurden bei 70°C im Kolben in einem Ölbad geschmolzen. Nach Vorliegen einer blasenfreien homogenen Schmelze wurden die Mischungen auf eine Glasplatte (10 × 10 cm) ausgegossen und die Form durch eine aufgelegte weitere Glasplatte unter seitlicher Anordnung von PTFE-Abstandhaltern (Dicke 0,5 mm) geschlossen. Die durch Klammern fixierte Form wurde ohne Zugabe eines Photoinitiators für 1 h unter Verwendung eines UV-Systems (F300M, Fusion UV, Gaithersburg, MD), das mit einer Hochdruck-Quecksilberdampflampe (1800 W) ausgestattet war, bestrahlt, um photoindiziert die freie radikalische Polymerisation/Vernetzung auszulösen. Der Abstand zwischen Lampenkopf und Probe betrug 25 cm (T = 90 °C). Nach dem Härten wurden die Proben mit Chloroform extrahiert, um nicht reagierte Komponenten zu entfernen, und bis zur Gewichtskonstanz getrocknet. Als Vergleichsmaterial wurde reines PCL10kDMA analog durch Photopolymerisation vernetzt, um ein Homopolymemetzwerk aus PCL10kDMA zu erhalten (PCL(100) in Tabelle 1).

Durch ¹H-HRMAS-NMR-spektroskopische Untersuchungen (Bruker DCX 300) wurden die Zusammensetzungen der Polymernetzwerke ermittelt. Obwohl die eingesetzten Mengen von PCL10kDMA und CHMA nicht quantitativ in das Netzwerk inkorporiert wurden, konnte gezeigt werden, dass die tatsächliche Zusammensetzung annähernd dem eingesetzten Verhältnis der beiden Komponenten im Polymernetzwerk entspricht.

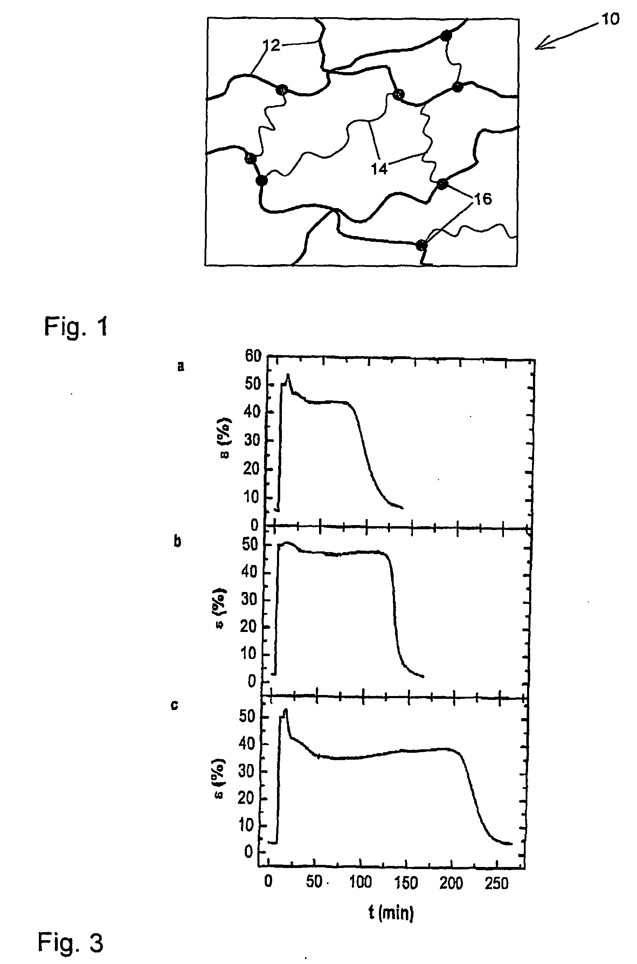

Figur 1 zeigt schematisch die idealisierte Struktur eines so erhaltenen insgesamt mit 10 bezeichneten PCL-PCHMA-Polymernetzwerkes. Hierin sind mit 12 die Segmente B (Poly(cyclohexylmethacrylat)-Segmente, PCHMA-Segmente) und mit 14 die Segmente A (PCL-Segmente) bezeichnet. Die PCHMA-Segmente 12 sind durch die beidseitig gebundenen PCL10kDMA-Ketten 14 kovalent vernetzt. Das gleiche gilt für die PCL-Segmente 14, die ebenfalls beidseitig kovalent verknüpft vorliegen (nicht dargestellt). Die Netzpunkte zwischen den Enden der PCL-Segmente 14 und den PCHMA-Segmenten 12 sind mit 16 bezeichnet.

### 2. Charakterisierung der Polymernetzwerke aus PCLDMA und PCHMA

Die thermischen Eigenschaften der gemäß Beispiel 1 hergestellten Polymernetzwerke aus PCL-Makromonomeren und CHMA-Monomeren unterschiedlicher Zusammensetzung wurden nach Extraktion mit Chloroform mit dynamisch-mechanischer Thermoanalyse (DMTA) untersucht, um die Existenz segregierter Phasen nachzuweisen, da eine kristalline PCL-Phase sowie eine amorphe PCHMA-Phase zur Fixierung temporärer Formen eingesetzt werden sollten. Die DMTA-Messungen wurden auf einem Eplexor 25 N (Gabo) ausgeführt, welches mit einem 25 N-Kraftaufnehmer ausgestattet war. Die statische Last betrug 0,50%, die dynamische Last 0,20%, die Frequenz 10 Hz und die Heizrate 2 K·min⁻¹ in einem Temperaturbereich von -100 bis +170°C.

Das PCL- und PCHMA-Segmente enthaltende AB-Polymernetzwerk zeigt im Bereich zwischen 0 und 150°C zwei gut differenzierte Phasenübergänge, die sich auf das Schmelzen von PCL-Kristalliten einerseits und den Glasübergang von PCHMA-Domänen zurückführen lassen. Dabei ist die untere Übergangstemperatur T_{trans,A} eindeutig mit dem Schmelzen bzw. der Kristallisation von PCL-Segmenten assoziiert, das bei dem Homopolymer PCL(100) bei 58 °C beobachtet wird und in den Copolymernetzwerken mit einem PCL-Massenanteil zwischen 10 und 80 % bei 43 bis 51 °C liegt (Tₘ (PCL)). Die für die Materialien, die bis zu 45 Gew.-% PCL enthielten, detektierte obere Übergangstemperatur T_{trans,B} bei etwa 140 °C kann hingegen eindeutig dem Glasübergang von PCHMA-Segmenten zugeordnet werden (T_{g}(PCHMA)). Für AB-Polymernetzwerke mit 50 Gew.-% oder mehr PCL konnte aufgrund des ungünstigen Signal-Rausch-Verhältnisses im DMTA-Experiment T_{g}(PCHMA) nicht bestimmt werden.

Diese Ergebnisse zeigen, dass das AB-Polymernetzwerk eine phasenseparierte Morphologie aufweist, in welcher die PCL- und PCHMA-Segmente eigene Phasen mit diskreten Übergangstemperaturen ausbilden, die zur temperaturgesteuerten Fixierung zweier temporären Formen geeignet sind. Da die ermittelten Werte für Tₘ(PCL) und T_{g}(PCHMA) im Copolymemetzwerk sich nicht wesentlich von den entsprechenden Homopolymeren unterscheiden, kann die Existenz von amorphen Mischphasen ausgeschlossen werden.

### 3. Programmierung eines Polymernetzwerkes aus PCLDMA und PCHMA

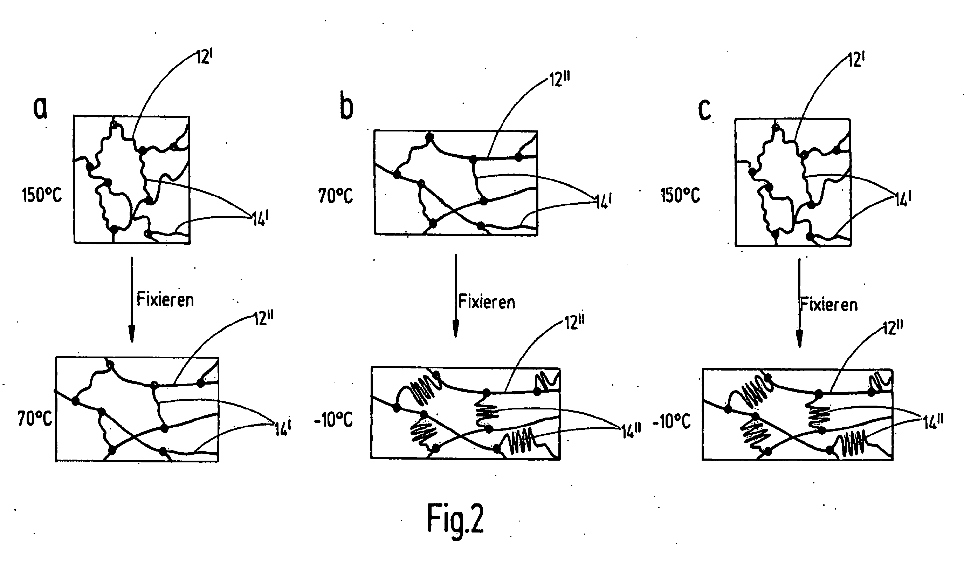

Für AB-Polymernetzwerke können die verschiedenen Schaltsegmente für die Fixierung einer temporären Form durch ein Einschritt-Programmierverfahren genutzt werden. Durch Anpassung des Temperaturbereichs, in dem die Programmierung erfolgt, kann gezielt ein Schaltsegment zur Fixierung gewählt werden. In den Beispielen 3.1 und 3.2 werden zunächst herkömmliche Zwei-Formen-Programmierungen über eine Übergangstemperatur (T_{trans,A} oder T_{trans,B}) erläutert (Figur 2a und 2b), ehe das erfindungsgemäße Einschritt-Programmierverfahren zur Drei-Formen-Programmierung unter Verwendung von zwei Übergangstemperaturen (T_{trans,A} und T_{trans,B}) anhand von Beispiel 3.3 erläutert wird (Figur 2c). Im vorliegenden Beispiel entspricht Tₘ(PCL) der unteren Übergangstemperatur T_{trans,A} und T_{g}(PCHMA) der oberen Übergangstemperatur T_{trans,B}.

### 3.1 Programmierung einer temporären Phase unter Fixierung durch PCHMA

Die AB-Polymernetzwerke hergestellt nach Beispiel 1 basierend auf PCLDMA und PCHMA wurden in einem zyklischen thermomechanischen Experiment derart programmiert, dass neben der herstellungsbedingten permanenten Form eine temporäre Form in dem "Formgedächtnis" des Polymers gespeichert und durch die PCHMA-Phase fixiert wurde. Hierfür wurde als obere Programmierungstemperatur (Tₕ) 150 °C verwendet, was oberhalb der Glasübergangstemperatur von PCHMA (T_{g}(PCHMA)) liegt, und als untere Programmierungstemperatur (Tₜ) 70 °C, was unterhalb von T_{g}(PCHMA) aber oberhalb von Tₘ(PCL) liegt. Die Prozesse auf molekularer Ebene sind in Figur 2a dargestellt, wobei der amorph-viskoelastische Zustand von PHCMA mit 12', der amorphe Zustand von PCL in der Schmelze mit 14' und die Glasphase von PHCMA mit 12" bezeichnet ist.
Zunächst wurde das Polymermaterial auf Tₕ = 150 °C erwärmt (Fig. 2a, oben) und durch eindimensionale Dehnung deformiert. Bei 150 °C sind alle Polymersegmente viskoelastisch, so dass die makroskopische Deformation der Probe zu einer Orientierung sowohl der PCLals auch der PCHMA-Segmente führt. Unter Fixierung dieser temporären Form wurde dann auf Tₜ = 70 °C abgekühlt, das heißt auf eine Temperatur unterhalb der Glasübergangstemperatur von PCHMA (T_{g}(PCHMA)) (Fig. 2a, unten). Infolgedessen findet der Glasübergang der PHCMA-Phase statt (12' → 12"), während die PCL-Phase in ihrem amorphen viskoelastischen Zustand 14' verbleibt.
Wird nachfolgend die Probe entlastet, können nur die amorphen PCL-Segmente 14' an Entropie gewinnen und eine teilweise Formrückstellung verursachen, solange dieser Prozess nicht durch die glasige PHCMA-Phase 12" gehindert wird. Somit wird die resultierende temporäre Form nur durch die PCHMA-Phase fixiert.

### 3.2. Programmierung einer temporären Formen unter Fixierung durch PCL

Die AB-Polymernetzwerke hergestellt nach Beispiel 1 basierend auf PCLDMA und PCHMA wurden in einem zyklischen thermomechanischen Experiment derart programmiert, dass neben der herstellungsbedingten permanenten Form eine temporäre Form in dem "Formgedächtnis" des Polymers gespeichert und durch die PCL-Phase fixiert wurde. Hierfür wurde als obere Programmierungstemperatur (Tₕ) 70 °C verwendet, was oberhalb der Schmelztemperatur von PCL (Tₘ(PCL)) und unterhalb von T_{g}(PCHMA) liegt, und als untere Programmierungstemperatur (Tₜ) -10 °C, was unterhalb von Tₘ(PCL) liegt. Die Prozesse auf molekularer Ebene sind in Figur 2b dargestellt, wobei der amorphe Zustand von PCL mit 14', der kristalline Zustand von PCL mit 14" und die Glasphase von PHCMA mit 12" bezeichnet ist.
Zunächst wurde das Polymermaterial auf Tₕ = 70 °C erwärmt (Fig. 2b, oben) und durch eindimensionale Dehnung deformiert. Bei 70 °C liegt PCHMA im glasigen Zustand 12" vor und PCL im amorphen viskoelastischen Zustand 14'. Die makroskopische Deformation der Probe ist daher mit einer Orientierung der PCL-Segmente verbunden. Unter Fixierung dieser temporären Form wurde dann auf Tₜ = -10 °C abgekühlt, das heißt auf eine Temperatur unterhalb der Übergangstemperatur von PCL (Tₘ(PCL)) (Fig. 2b, unten). Infolgedessen findet die Kristallisation der PCL-Phase statt (14' → 14"), während die PCHMA-Phase in ihrem glasigen Zustand 12" verbleibt. Es ist zu beachten, dass hierbei keine quantitative Kristallisation der PCL-Phase stattfindet, das heißt ein Teil der PCL-Ketten verbleibt im amorphen Zustand. Wird nachfolgend die Probe entlastet, bleibt es bei der nahezu vollständigen Beibehaltung dieser temporären Form, da die Kettensegmente in beiden Phasen einen weitgehend unflexiblen Zustand aufweisen. Die temporäre Form wird nur durch die PCL-Phase fixiert, insbesondere durch physikalische Vernetzungen der PCL-Kristallite, da PCHMA während des gesamten Programmierungsverfahrens im Glaszustand 12" vorliegt.

### 3.3. Einschritt-Programmierung von zwei temporären Formen unter Fixierung durch PCHMA und PCL

Die AB-Polymernetzwerke hergestellt nach Beispiel 1 basierend auf PCLDMA und PCHMA wurden in einem zyklischen thermomechanischen Experiment erfindungsgemäß derart programmiert, dass neben der herstellungsbedingten permanenten Form zwei temporäre Formen in dem "Formgedächtnis" des Polymers gespeichert und sowohl durch die PCL-Phase 14 als auch durch die PCHMA-Phase 12 fixiert wurden. Hierfür wurde als obere Programmierungstemperatur (Tₕ) 150 °C verwendet, welche oberhalb der Schmelztemperatur von PCL (Tₘ(PCL)) und oberhalb der Glasübergangstemperatur von PCHMA (T_{g}(PCHMA)) liegt, und als untere Programmierungstemperatur (Tₜ) -10 °C, welche unterhalb von Tₘ(PCL) und unterhalb von T_{g}(PCHMA) liegt. Die Prozesse auf molekularer Ebene sind in Figur 2c dargestellt, wobei der amorph-viskoelastische Zustand von PCHMA und PCL mit 12' bzw. 14' der kristalline Zustand von PCL mit 14" und der glasige Zustand von PHCMA mit 12" bezeichnet ist.
Zunächst wurde das Polymermaterial auf Tₕ = 150 °C erwärmt (Fig. 2c, oben) und durch eindimensionale Dehnung entsprechend einer ersten temporären Form deformiert. Wie bereits bei Beispiel 3.1 beobachtet, liegen bei 150 °C sowohl die PCL- als auch die PCHMA-Phase im viskoelastischen Zustand 14' bzw. 12' vor, so dass beide Phasen zur makroskopischen Deformation der Probe durch Orientierung der entsprechenden Kettensegmente in Richtung der äußeren Kraft beitragen. Unter Fixierung dieser temporären Form wurde dann auf Tₜ = -10 °C abgekühlt, das heißt auf eine Temperatur unterhalb der Glasübergangstemperatur T_{g}(PCHMA) und unterhalb der Schmelztemperatur Tₘ(PCL) (Fig. 2c, unten). Infolgedessen findet während der Abkühlung zunächst der Glasübergang der PCHMA-Phase (12' → 12") und dann die teilweise Kristallisation der PCL-Phase (14' → 14") statt. Wird nachfolgend die Probe entlastet, bleibt es bei der nahezu vollständigen Beibehaltung dieser ersten temporären Form, da beide Phasen einen weitgehend unflexiblen Zustand aufweisen. Die temporäre Form wird somit sowohl durch die PCL- als auch durch die PCHMA-Phase durch Bildung physikalischer Vernetzungen fixiert.

Ausgehend von einem auf diese Weise programmierten Polymemetzwerk, das in seiner ersten temporären Form vorliegt, können eine zweite temporäre Form und die permanente Form nacheinander abgerufen werden, wenn das Polymer erst auf eine Zwischentemperatur Tₘ(PCL) < T < T_{g}(PCHMA) und anschließend auf eine Temperatur oberhalb von T_{g}(PCHMA) erwärmt wird. Das Wiederherstellen zuvor fixierter Formen wird als Formgedächtnis- oder Shape-Memory-Effekt (SM-Effekt) bezeichnet.

### 4. Formgedächtniseffekt

Um die Formgedächtniseigenschaften der gemäß Beispiel 1 hergestellten AB-Polymernetzwerke zu ermitteln, wurden die Proben in einem Zugprüfgerät, das mit einer Thermokammer ausgestattet war, zyklischen, thermomechanischen Untersuchungen unterzogen. In diesen Experimenten wurden in jedem Zyklus die Polymermaterialien entsprechend den Temperaturbereichen der Beispiele 3.1 bis 3.3 programmiert und nach Entlastung der Proben über dieselben Temperaturbereiche wieder erwärmt, wobei die Rückstellung durch Messung der Dehnung verfolgt wurde. Figur 3 stellt die Dehnung während eines Programmierungszyklus und Wiederherstellungszyklus im vierten Zyklus des Polymers PCL(45)CHM als Funktion der Zeit dar. Dabei ist in Figur 3a der Dehnungs-Zeit-Plot für den Temperaturbereich zwischen 70 und 150 °C entsprechend Beispiel 3.1 (Figur 2a), in Figur 3b der Plot für den Temperaturbereich zwischen -10 und 70 °C entsprechend Beispiel 3.2 (Figur 2b) und in Figur 3c der entsprechende Plot für den Temperaturbereich zwischen -10 und 150 °C entsprechend dem erfindungsgemäßen Beispiel 3.2 (Figur 2c) dargestellt.

Im Fall von Figur 3a wurde die Probe von der nach dem dritten Zyklus wiedergewonnenen permanenten Form auf εₘ = 50% bei Tₕ = 150 °C deformiert. Die Kühlung auf Tₜ = 70 °C unterhalb T_{g}(PCHMA) und oberhalb Tₘ(PCL) unter Aufrechterhaltung der mechanischen Kraft führte zunächst zu einer geringen Ausdehnung der Probe aufgrund ihrer Entropieelastizität und dann aufgrund des Glasübergangs von PCHMA zu einer Probenverkürzung. Die nachfolgende Entlastung der Probe und Wiedererwärmung auf Tₕ = 150 °C führte zu einer Rückstellung der permanenten Form. Dieses Experiment belegt die Eignung der PCHMA-Glasphase, die temporäre Form zu fixieren und die Wiederherstellung der permanenten Form zu erlauben.
Figur 3b zeigt das im Temperaturbereich von Tₜ = -10 °C und Tₕ = 70 °C durchgeführte Zwei-Formen-Experiment. Nach Dehnung der Probe auf εₘ = 50% bei 70 °C im Anschluss an den dritten Zyklus wurde die Probe unter Lastkontrolle auf -10°C abgekühlt. Die dabei beobachtete Kontraktion ist auf die energie-elastischen Eigenschaften der PCHMA-Glasphase zurückzuführen. Die erneute Erwärmung auf 70 °C induzierte die Wiederherstellung der permanenten Form im vierten Zyklus. Es ist erkennbar, dass die Zeitspanne der Rückstellungsphase, die proportional zur Temperatur ist, wesentlich kürzer als in Figur 3a ist. Hieraus kann geschlossen werden, dass der die Rückstellung bewirkende Schmelzprozess von PCL sich über einen kürzeren Zeitintervall erstreckt als der Erweichungsprozess von PCHMA, der im Fall von Figur 3a für die Wiederherstellung der permanenten Form verantwortlich war. Dieser Versuch bestätigt die Eignung der Kristalliten der PCL-Phase, die temporäre Form zu fixieren und die Wiederherstellung der permanenten Form zu betreiben. Im dritten, in Figur 3c gezeigten Fall wurde die Probe wie in ersten Fall bei Tₕ = 150 °C deformiert (entsprechend der ersten temporären Form) und anschließend unter Aufrechterhaltung der mechanischen Kraft auf Tₜ= -10 °C gekühlt. Die Kühlung führte zunächst zum glasigen Erstarren von PCHMA gefolgt von einer Kristallisation von PCL. Das große Temperaturintervall von 160 K (verglichen mit 80 K in Figur 3a und 3b) führte zu einer stärkeren Kontraktion beim Abkühlen verglichen mit Figur 3a. Nach Entlastung der nun in ihrer ersten temporären Form vorliegenden Probe führte ihre erneute Erwärmung auf 150 °C zunächst zu einer langsamen Zunahme der Dehnung infolge thermischer Ausdehnung der Probe. Bei einer Temperatur um 54 °C nahm die Dehnung leicht ab, was mit dem Schmelzen der PCL-Kristallite erklärt werden kann, die bei der gegebenen Zusammensetzung der Probe zu einem vergleichsweise geringen Anteil zur Fixierung der zweiten temporären Form beitrugen. Die nach dem Phasenübergang von PCL erhaltene Form entspricht der zweiten temporären Form. Weitere Erwärmung bis 150 °C führte zur Wiederherstellung der permanenten Form infolge der Erweichung der glasigen PCHMA-Glasphase.

Der in Figur 3 dargestellte Programmier- und Wiederherstellungszyklus wurde mit sämtlichen AB-Copolymernetzwerken aus Beispiel 1 durchgeführt. Aus den 2. bis 5. Zyklen wurden die Schalttemperaturen T_{sw} für die PCL- und PCHMA-Segmente ermittelt und gemittelt. In gleicher Weise wurden das Dehnungsfixierungs-Verhältnis R_{f} und das Dehnungsrückstellungs-Verhältnis Rᵣ zur Quantifizierung des Formgedächtnisverhaltens ermittelt und gemittelt. Dabei ist R_{f} ein Maß für die Fixierung einer temporären Form, während Rᵣ das Ausmaß der Rückstellung beschreibt. Die Ergebnisse für alle drei Temperaturbereiche sind in Tabelle 1 zusammengestellt.

Hier ist erkennbar, dass im Fall der erfindungsgemäßen Einschritt-Programmierung eines Dreiformenkunststoffes (Tₜ = -10 °C, Tₕ = 150 °C) Polymernetzwerke mit 30% oder weniger PCL nur einen, auf die Erweichung der glasigen PCHMA-Phase zurückzuführenden Phasenübergang zeigen, da hier keine segregierte PCL-Phase ausgebildet wird. Auf der anderen Seite zeigen die Materialien mit 80% oder mehr PCL ebenfalls nur einen Phasenübergang, der mit dem Schmelzen von PCL-Kristalliten assoziiert ist. Nur bei den Materialien mit 35 bis 60 Gew.-% PCL wurden zwei Schalttemperaturen beobachtet. Bei diesen Zusammensetzungen tragen sowohl die PCL- als auch die PCHMA-Phase zur Fixierung der beiden temporären Formen bei, so dass bei diesen Materialien Dreiformeneigenschaften im Rückstellungsprozess erhalten werden. Für PCL(35)CHM, PCL(40)CHM und PCL(45)CHM wurde ein vergleichsweise geringer Beitrag von PCL zur Fixierung der Formänderung von der ersten temporären Form zur zweiten temporären Form festgestellt, da die Gesamtdeformation im Programmierungsprozess nicht stark ausgeprägt ist. Hingegen konnte für PCL(50)CHM und PCL(60)CHM gezeigt werden, dass der Anteil von PCL zur Fixierung der aufgezwungenen Dehnung εₘ variiert werden kann. Die Formänderungen von der ersten temporären Form zur zweiten temporären Form betragen zwischen 30 und 73% bezogen auf die Gesamtrückstellung, d.h. dem Übergang von der zweiten temporären Form zur permanenten Form.

Die am Beispiel des Systems aus PCL und PCHMA dargestellten Untersuchungen belegen, dass mit dem erfindungsgemäßen Einschritt-Programmierverfahren ein Polymermaterial mit Dreiformeneigenschaften erhalten werden kann.

**Tabelle: Formgedächtniseigenschaften von Polymernetzwerken aus PCLDMA und CHMA bestimmt in zyklischen, thermomechanischen Versuchen.^{[a]}**

| | Tₜ = 70 °C, Tₕ = 150 °C | | | Tₜ = -10 °C, Tₕ = 70 °C | | | Tₜ = -10 °C, Tₕ = 150 °C | | | |
|---|---|---|---|---|---|---|---|---|---|---|
| Probe^{[b]} | R̅̄_{f} [%] | R̄ᵣ [%] | T̄̅_{sw} [°C] | R̄_{f} [%] | R̄ᵣ [%] | T̄_{sw} [°C] | R̄_{f} [%] | R̄ᵣ [%] | T̄_{sw} [°C] | |
| PCL(30)CHM | 93,2 ±0,2 | 100,2 ±3,1 | 124,5 ±1,3 | 98,1±0,2 | 98,0 ±1,2 | 54,4 ±0,9 | 99,6 ±0,1 | 97,0 ±5,3 | 126,6 ±1,9 | |
| PCL(35)CHM | 96,9 ±0,1 | 97,6 ±2,8 | 126,1 ± 1,7 | 97,9 ±0,1 | 98,6 ±1,3 | 53,3 ±0,5 | 99,7 ±0,1 | 100,8 ±4,0 | 54,1 ±0,5 | 125,6 ±2,1 |
| PCL(40)CHM | 94,7 ±1,1 | 100,1 ±0,7 | 127,3 ±3,0 | 98,4 ±0,2 | 98,0 ±2,1 | 53,0 ±0,8 | 99,7 ±0,1 | 97,3 ±6,2 | 54,0 ±0,4 | 124,0 ±1,8 |
| PCL(45)CHM | 96,3 ±0,2 | 100,8 ±6,1 | 124,1 ±1,1 | 98,7 ±0,3 | 98,3 ±1,3 | 53,5 ±0,4 | 99,5 ±0,2 | 95,6 ±7,6 | 57,5 ±0,7 | 124,2 ±1,4 |
| PCL(50)CHM | 68,1 ±3,5 | 99,0 ±5,8 | 124,6 ±0,7 | 99,3 ±0,1 | 99,2 ±0,9 | 53,4 ±0,5 | 99,7 ±0,2 | 102,3 ±5,3 | 56,6 ±0,5 | 123,3 ±2,5 |
| PCL(60)CHM | 38,5 ±1,5 | 97,0 ±2,3 | 112,7 ±2,1 | 99,8 ±0,1 | 98,1 ±2,8 | 57,4 ±0,3 | 99,8 ±0,1 | 100,4 ±2,9 | 57,0 ±0,4 | 110,8 ±5,9 |
| PCL(80)CHM | - | - | - | 99,8 ±0,1 | 97,6 ±6,7 | 57,9 ±0,3 | 99,8 ±0,1 | 102,8 ±0,6 | 57,1 ±0,3 | |
| PCL(100) | - | - | - | 99,8 ±0,2 | 100,5 ±9,2 | 59,1 ±0,3 | 99,8 ±0,1 | 96,6 ±4,9 | 58,5 ±0,3 | |

| | | | | | | | | | | |
|---|---|---|---|---|---|---|---|---|---|---|
| [a] R̅_{f} : mittleres Dehnungsfixierungs-Verhältnis des zweiten bis fünften Zyklus, R̅ᵣ : mittleres Dehnungsrückstellungs-Verhältnis des zweiten bis fünften Zyklus, T̅̄_{sw}: mittlere Schalttemperatur des zweiten bis fünften Zyklus. [b] Die in den Klammern angegebene Zahl gibt den Massenanteil von PCLDMA in % bei der Herstellung an. | | | | | | | | | | |

### ABKÜRZUNGEN / BEZUGSZEICHEN

- T_{trans,A}: untere Übergangstemperatur
- T_{trans,B}: obere Übergangstemperatur
- Tₘ(PCL): Schmelztemperatur der PCL-Segmente
- T_{g}(PCHMA): Glasübergangstemperatur der PCHMA-Segmente

- 10: Polymernetzwerk
- 12: segregierte Phase A / PCHMA-Segmente
- 12': amorph-viskoelastische PCH MA-Segmente
- 12": glasige PCHMA-Segmente
- 14: segregierte Phase B/ PCL-Segmente
- 14': amorph-viskoelastische PCL-Segmente
- 14": semikristalline PCL-Segmente
- 16: Netzpunkte

## Patentansprüche

1. Verfahren zur Herstellung eines programmierten Formgedächtnispolymers, das eine erste temporäre Form einnimmt und zumindest zwei weitere gespeicherte, thermisch abrufbare, Formen aufweist, nämlich zumindest eine zweite temporäre Form und eine permanente Form, bestehend aus den Schritten
(a) Bereitstellung eines Formgedächtnispolymers, das mindestens zwei Schaltsegmente (A, B) umfasst, welche durch Phasensegregation jeweils eine Schaltphase mit jeweils einer Übergangstemperatur (T_{trans,A}, T_{trans,B}) ausbilden,
(b) Deformation des Formgedächtnispolymers in eine der ersten temporären Form entsprechende Form bei einer Temperatur oberhalb der oberen Übergangstemperatur (T_{trans,A}), und
(c) Abkühlung auf eine Temperatur unterhalb der unteren Übergangstemperatur (T_{trans,B}) unter Fixierung der ersten temporären Form.

2. Verfahren nach Anspruch 1,
**dadurch gekennzeichnet, dass**
ein Formgedächtnispolymer bereitgestellt wird, das eine AB-Netzwerkarchitektur aufweist, bei dem die Schaltphasen bildenden Schaltsegmente mit beiden Kettenenden kovalent im Polymernetzwerk gebunden vorliegen.

3. Verfahren nach Anspruch 1 oder 2,
**dadurch gekennzeichnet, dass**
die Deformation eine Dehnung des Formgedächtnispolymers in mindestens eine Raumrichtung, eine Stauchung in mindestens eine Raumrichtung, eine Biegung oder eine Kombination aus diesen umfasst.

4. Verfahren nach einem der vorhergehenden Ansprüche,
**dadurch gekennzeichnet, dass**
ein Ausmaß einer Rückstellung während einer Erwärmung des programmierten Formgedächtnispolymers von der ersten temporären Form In die zweite temporäre Form und/oder von der zweiten temporären Form in die permanente Form durch die Massenanteile der zumindest zwei segregierten Phasen (A, B) im Formgedächtnispolymers festgelegt wird.

5. Verfahren nach einem der vorhergehenden Ansprüche,
**dadurch gekennzeichnet, dass**
das Formgedächtnispolymer in Schritt (a) in seiner permanenten Form eingesetzt wird.

6. Verfahren nach einem der vorhergehenden Ansprüche,
**dadurch gekennzeichnet, dass**
ein Formgedächtnispolymer bereitgestellt wird, dessen erstes Schaltsegment im Wesentlichen auf einem Polyester der allgemeinen Formel I mit n = 1...14 oder einem Co-Polyester der allgemeinen Formel I mit unierschiedlichen n oder einem Derivat von diesen basiert, wobei das erste Schaltsegment insbesondere ein Poly(ε-caprolacton)-Segment mit n = 5 oder ein Derivat von diesem ist, in dem die aliphatischen Kohlenstoffatome unabhängig voneinander mit einem oder zwei, unverzweigten oder verzweigten, gesättigten oder ungesättigten C1- bis C14-Resten substituiert sein können

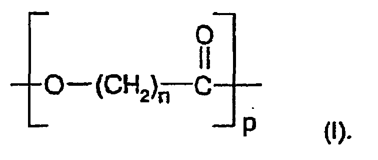

7. Verfahren nach einem der vorhergehenden Ansprüche,
**dadurch gekennzeichnet, dass**
ein Formgedächtnispolymer bereitgestellt wird, dessen zweites Schaltsegment Im Wesentlichen auf einem Polyacrylat der allgemeinen Formel II basiert, worin R gleich H oder CH₃ ist und R₁ einen gesättigten oder ungesättigten, zyklischen oder aliphatischen, unsubstituierten oder substituierten C1-C18-Rest bedeutet, wobei das zweite Schaltsegment Insbesondere ein Poly(cyclohexylmethacrylat)-Segment mit R = CH₃ und R₁ = C₆H₁₁ oder ein Poly(cyclohexylacrylat)-Segment mit R = H und R₁ = C₆H₁₁ ist

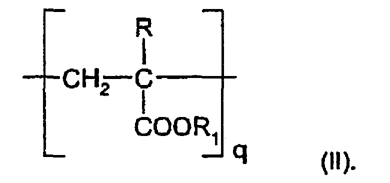

8. Verfahren nach Anspruch 6 oder 7,
**dadurch gekennzeichnet, dass**
ein Formgedächtnispolymer eingesetzt wird, dessen erstes Schaltsegment ein Polyester oder ein Co-Polyester der allgemeinen Formel I mit n = 1...14 , insbesondere Poly(ε-caprolacton), ist und dessen zweites Schaltsegment Polyacrylat der allgemeinen Formel II, insbesondere Poly(cyclohexylmethacrylat), ist.

9. Verfahren nach Anspruch 8,
**dadurch gekennzeichnet, dass**
ein Massenanteil des Poly(ε-caprolacton)-Segments im Formgedächtnispolymer oberhalb von 30 % und unterhalb von 80 % liegt, insbesondere im Bereich von 35 bis 60 %, vorzugsweise im Bereich von 50 bis 60 %, liegt.

10. Verfahren nach einem der vorhergehenden Ansprüche,
**dadurch gekennzeichnet, dass**
die Schaltsegmente ein mittleres Molekulargewicht im Bereich von 2.000 bis 100.000 g/mol, insbesondere von 5.000 bis 40.000 g/mol haben.

## Claims

1. Method for producing a programmed shape memory polymer which assumes a first temporary shape and has at least two further stored, thermally retrievable, shapes, namely at least a second temporary shape and a permanent shape, consisting of the steps of
(a) providing a shape memory polymer which comprises at least two switching segments (A, B) which through phase segregation each form a switching phase having a separate transition temperature (T_{trans.A}, T_{trans.B}),
(b) deforming the shape memory polymer at a temperature above the upper transition temperature (T_{trans.A}) into a shape corresponding to the first temporary shape, and
(c) cooling to a temperature below the lower transition temperature (T_{trans.B}) while fixing the first temporary shape.

2. Method according to Claim 1,
**characterized in that**
a shape memory polymer provided has an AB network architecture wherein the switching segments forming the switching phases are present in the polymer network attached thereto by covalent bonds at both their chain ends.

3. Method according to Claim 1 or 2,
**characterized in that**
the deforming comprises expansion of the shape memory polymer in at least one spatial direction, compression in at least one spatial direction, bending or a combination thereof.

4. Method according to any preceding claim,
**characterized in that**
an extent of any recovery during the heating of the programmed shape memory polymer from the first temporary shape into the second temporary shape and/or from the second temporary shape into the permanent shape is determined by the mass fractions of the at least two segregated phases (A, B) in the shape memory polymer.

5. Method according to any preceding claim,
**characterized in that**
the shape memory polymer is used in step (a) in its permanent shape.

6. Method according to any preceding claim,
**characterized in that**
a shape memory polymer provided has a first switching segment based essentially on a polyester of the general formula I where n = 1 ... 14 or on a copolyester of the general formula I where having different n's, or on a derivative of these, wherein the first switching segment is in particular a poly(ε-caprolactone) segment where n = 5 or a derivative thereof, in which the aliphatic carbon atoms can be substituted independently of each other with one or two, branched or unbranched, saturated or unsaturated C1 to C14 radicals

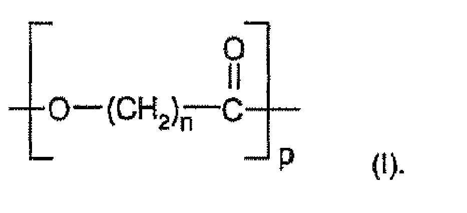

7. Method according to any preceding claim,
**characterized in that**
a shape memory polymer provided has a second switching segment based essentially on a polyacrylate of the general formula II, where R is H or CH₃ and R₁ is a saturated or unsaturated, cyclic or aliphatic, substituted or unsubstituted C1-C18 radical, wherein the second switching segment is in particular a poly(cyclohexyl methacrylate) segment where R = CH₃ and R₁ = C₆H₁₁ or a poly(cyclohexyl acrylate) segment where R = H and R₁ = C₆H₁₁

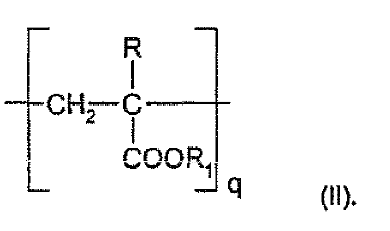

8. Method according to Claim 6 or 7,
**characterized in that**
a shape memory polymer used has a first switching segment which is a polyester or a copolyester of the general formula I where n = 1 ... 14, in particular poly(ε-caprolactone), and a second switching segment which is polyacrylate of the general formula II, in particular poly(cyclohexyl methacrylate).

9. Method according to Claim 8,
**characterized in that**
a mass fraction of the poly(ε-caprolactone) segment in the shape memory polymer is above 30% and below 80%, in particular in the range from 35 to 60% and preferably in the range from 50 to 60%.

10. Method according to any preceding claim,
**characterized in that**
the switching segments have an average molecular weight in the range from 2000 to 100 000 g/mol and in particular in the range from 5000 to 40 000 g/mol.

## Revendications

1. Procédé de fabrication d'un polymère à mémoire de forme programmé, qui prend une première forme temporaire et présente au moins deux formes supplémentaires mémorisées, accessibles thermiquement, à savoir au moins une seconde forme temporaire et une forme permanente, constitué par les étapes suivantes :
(a) la préparation d'un polymère à mémoire de forme qui comprend au moins deux segments de commutation (A, B), qui forment chacun par ségrégation de phases une phase de commutation ayant à chaque fois une température de transition (T_{trans,A}, T_{trans,B}),
(b) la déformation du polymère à mémoire de forme en une forme correspondant à la première forme temporaire à une température supérieure à la température de transition supérieure (Tₜᵣₐₙₛ,_{A}) et
(c) le refroidissement à une température inférieure à la température de transition inférieure (T_{trans,B}) avec fixation de la première forme temporaire.

2. Procédé selon la revendication 1, **caractérisé en ce qu'**un polymère à mémoire de forme est préparé, qui présente une architecture de réseau AB selon laquelle les segments de commutation formant les phases de commutation se présentent dans le réseau polymère sous forme reliée par une liaison covalente aux deux extrémités de chaîne.

3. Procédé selon la revendication 1 ou 2, **caractérisé en ce que** la déformation comprend un allongement du polymère à mémoire de forme dans au moins une direction de l'espace, une compression dans au moins une direction de l'espace, une flexion ou une de leurs combinaisons.

4. Procédé selon l'une quelconque des revendications précédentes, **caractérisé en ce qu'**un degré d'un retour de la première forme temporaire à la seconde forme temporaire et/ou de la seconde forme temporaire à la forme permanente pendant un chauffage du polymère à mémoire de forme programmé est défini par les proportions massiques des deux phases ségréguées ou plus (A, B) dans le polymère à mémoire de forme.

5. Procédé selon l'une quelconque des revendications précédentes, **caractérisé en ce que** le polymère à mémoire de forme est utilisé à l'étape (a) sous sa forme permanente.

6. Procédé selon l'une quelconque des revendications précédentes, **caractérisé en ce qu'**un polymère à mémoire de forme est préparé, dont le premier segment de commutation est essentiellement à base d'un polyester de formule générale I avec n = 1 à 14 ou d'un co-polyester de formule générale I avec différents n ou d'un de leurs dérivés, le premier segment de commutation étant notamment un segment de poly(ε-caprolactone) avec n = 5 ou un de ses dérivés, dont les atomes de carbone aliphatiques peuvent être substitués indépendamment les uns des autres avec un ou deux radicaux en C1 à C14 non ramifiés ou ramifiés, saturés ou insaturés

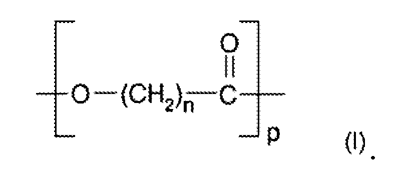

7. Procédé selon l'une quelconque des revendications précédentes, **caractérisé en ce qu'**un polymère à mémoire de forme est préparé, dont le second segment de commutation est essentiellement à base d'un polyacrylate de formule générale II, R étant H ou CH₃ et R₁ signifiant un radical en C1-C18 saturé ou insaturé, cyclique ou aliphatique, non substitué ou substitué, le second segment de commutation étant notamment un segment de poly(méthacrylate de cyclohexyle) avec R = CH₃ et R₁ = C₆H₁₁ ou un segment de poly (acrylate de cyclohexyle) avec R = H et R₁ = C₆H₁₁

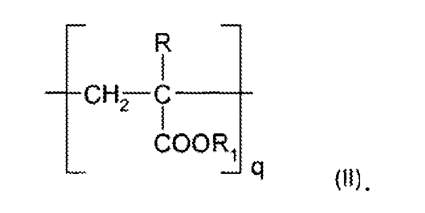

8. Procédé selon la revendication 6 ou 7, **caractérisé en ce qu'**un polymère à mémoire de forme est utilisé, dont le premier segment de commutation est un polyester ou un co-polyester de formule générale I avec n = 1 à 14, notamment la poly(ε-caprolactone), et dont le second segment de commutation est un polyacrylate de formule générale II, notamment le poly(méthacrylate de cyclohexyle).

9. Procédé selon la revendication 8, **caractérisé en ce qu'**une proportion massique du segment de poly(ε-caprolactone) dans le polymère à mémoire de forme est supérieure à 30 % et inférieure à 80 %, notamment dans la plage allant de 35 à 60 %, de préférence dans la plage allant de 50 à 60 %.

10. Procédé selon l'une quelconque des revendications précédentes, **caractérisé en ce que** les segments de commutation ont un poids moléculaire moyen dans la plage allant de 2 000 à 100 000 g/mol, notamment de 5 000 à 40 000 g/mol.
